# EUROPEAN PATENT APPLICATION

(11) **EP 2 073 341 A1**
(43) Date of publication of application: **24.06.2009**
(21) Application number: 07123524.6
(22) Date of filing: 18.12.2007
(51) Int. Cl.: H02J 9/00

(54) **Power saving mechanism in an AC power adaptor**

(71) Applicant: LUCENT TECHNOLOGIES INC., Murray Hill NJ 07974-0636 (US)
(72) Inventor: Aartse Tuijn, Jasper, 7522 MH Enschede (NL); Haalen, Ronald, 7559 NH Hengelo (NL)
(74) Representative: MERH-IP Matias Erny Reichl Hoffmann

(57) **Abstract**

An AC adaptor is configured for supplying power from an AC source (A) to an electrical device (C) via a power path in the power adaptor. The power adaptor includes a power saving mechanism comprising attachment sensing means (F) for sensing attachment of the electrical device (C) to the power adaptor. In addition, the power saving mechanism comprises a switching means (D) for allowing the power path to be switched off when the electrical device (C) is not attached to the power adaptor, to thereby reduce the amount of power supplied from the AC source (A).

## Description

The present invention relates to an AC power adaptor for supplying power from an AC source to an electrical device, with the AC power adaptor having a power saving mechanism. Moreover, the invention relates to a method for saving power in such AC power adaptor.

Electrical devices, in particular mobile electronic devices (e.g., mobile phones, PDAs or laptop computers), are often equipped with external AC power adaptors, in particular external voltage converters, for converting AC power from the AC power line (typically a 220 Volts or 110 Volts AC power line) to a power format adapted for the device, typically a DC voltage (e.g., 5 Volts). The DC voltage can be used to supply the electrical device for operation and/or to charge the device in case of a mobile device. The electrical device can be attached to the power adaptor, e.g., for charging the device, and detached from the power adaptor, e.g., after charging the device.

When the power adaptor is connected to the AC power line, the power adaptor internally dissipates power. This is even the case when the electrical device is not attached to the adaptor. E.g., the primary coil of a transformer in the power adaptor dissipates power when the device is not attached. Although the instantaneous power dissipation of a power adaptor is not very high (typically 0.2 - 4.0 Watt), the dissipated energy over a longer period (e.g., one year) is often remarkable since power adaptors are often connected to the AC power line most of the time, e.g., 24 hours a day and 7 days per week.

For reducing the power dissipation, one can manually disconnect the AC power adaptor from the AC power line when the adaptor is not in use, i.e., when no electrical device is attached to the power adaptor. However, this solution is laborious.

Alternatively, one can use more energy efficient power adaptors. Nevertheless, even more energy efficient power adaptors connected to the AC power line still use considerable energy while not being in use.

Therefore, there is a need to provide an AC power adaptor with reduced power dissipation when the power adaptor is not in use.

This is achieved by the AC power adaptor and the method according to the independent claims. The dependent claims refer to preferred embodiments of the invention.

According to claim 1, an AC power adaptor is configured for supplying power from an AC source to an electrical device via a power path in the power adaptor. Such AC power adaptor may be an AC to AC power adaptor (e.g., for transforming a higher AC voltage to a lower AC voltage) or more preferably an AC to DC power adaptor. The power adaptor comprises a power saving mechanism, with the power saving mechanism comprising attachment sensing means for sensing attachment of the electrical device to the power adaptor. E.g., such attachment sensing means may comprise a mechanical switch, which is automatically pressed when the electrical device is attached to the power adaptor. In addition, the power saving mechanism comprises a switching means for allowing the power path to be switched off when the electrical device is not attached to the power adaptor. Preferably, the switching means are for switching on the power path when the electrical device is attached to the power adaptor and switching off the power path when the electrical device is detached from the power adaptor.

By providing such power saving mechanism in the AC power adaptor, the power path of the power adaptor is switched off when the electrical device is not attached. Therefore, in case the electrical device is not attached to the AC power adaptor the adaptor does not draw power from the AC power line or - if any - only a very small amount of power. The inventive solution is inexpensive and simple to implement.

It should be noted that claim 1 covers also such embodiments, wherein the attachment sensing means and the switching means are realized as a combined single element providing both functions. Nevertheless, the sensing means and the switching means are preferably realized by two or more elements.

Furthermore, it should be noted that the phrase "attaching the electrical device to the power adaptor" does not imply a single direction of movement between the electrical device and the power adaptor when attaching. Instead, the electrical device may be moved in the direction of the power adaptor or vice versa. Typically, however, when the electrical device is attached to the power adaptor, the electrical device is connected to the unmoved power adaptor or the power connector of the power adaptor is connected to the electrical device.

According to a preferred embodiment, the AC power adaptor comprises a circuit that makes sure that the power adaptor is switched off when no device is attached. In such case this circuit may be a control circuit controlling a controllable switch connected to switch on and off the power path. Preferably, a power source, in particular a voltage source (e.g., a battery or a capacitor), in the control circuit feeds the control circuit.

Advantageously, the sensing means as part of the circuit are configured to selectively connect the power source to the control circuit (and to disconnect the power source from the control circuit). The sensing means may be used to switch on the control circuit. The sensing means may be also used to switch off the control circuit.

The sensing means may be configured to connect the power source to the control circuit (and to switch the control circuit on) when the sensing means sense attachment of the electrical device to the power adaptor. The power source may be disconnected from the control circuit by the sensing means as long as the electrical device is not attached to the power adaptor.

Preferably, when the sensing means sense attachment of the electrical device and switch on the control circuit, the control circuit drives the controllable switch to switch on the power path.

According to a preferred embodiment, the controllable switch may be a relay, the power source may be voltage source (e.g., a battery) and the sensing means may work as a switch to selectively connect the power source to the control input of the relay. When the sensing means sense attachment of the electrical device and switch on the control circuit, the input of the relay is the energized, thereby switching on the relay and the power path.

The power saving mechanism may be configured (by using an appropriate circuitry) in that the power path feeds the control circuit after the controllable switch has switched on the power path. When the power path feeds the control circuit the power source is not needed any more for feeding the control circuit and may be disconnected from the control circuit. Therefore, the battery is only connected for a very short moment, thereby saving power of the power source. Therefore, the power saving mechanism can be used for a longer a period without replacing or recharging the power source. The disconnection of the power source from the control circuit may take place at the moment the power path feeds the control circuit. In this case, the power source is only connected for the time it takes to switch on the power path and to transfer power to the control circuit.

Preferably, the power source is a rechargeable power source, in particular a rechargeable battery, and the power saving mechanism is configured to charge the power source when the power path is switched on. In this case, any power loss due to feeding the control circuit may be fully compensated and the power source has not to be replaced.

The attachment sensing means may be configured to sense an electrical connection between the power path and the power input of the electrical device, e.g., by measuring the electrical resistance at the power contact. However, preferably, the sensing means are configured to sense mechanical attachment of electrical device to the power adaptor. In this case the means may be realized as a mechanical switch, in particular a small button located near the electrical connection between the power path and the electrical device, which is automatically pressed when the electrical device is attached to the power adaptor. Alternatively, for sensing mechanical attachment the attachment sensing means may comprise at least one contact different from the contact for power supply. A further contact located at the device may be electrically connected to this contact when attaching the electronic device to the power adaptor. E.g., the sensing means may comprise two electrically separate contacts which are connected to each other by means of an electrical bridge at the device.

It should be noted that basically the above mentioned aspects of the invention can be arbitrarily combined.

According to the independent method claim, a method for saving power in an AC power adaptor comprises the step of sensing detachment of the electrical device from the power adaptor. When the electrical device is detached from the power adaptor the power path is switched off. The remarks related to the AC power adaptor and its preferred embodiments as discussed above and given in the dependent claims are also applicable to the method.

Furthermore, it should be noted that the disclosure of the invention also covers other claim combinations than the claim combinations which are explicitly given by the back references in the dependent claims, i.e., the claims can be basically combined in any order.

The invention is explained below in an exemplary manner with reference to the accompanying drawings, wherein
- Fig. 1: illustrates a first embodiment of the AC power adaptor, showing the power adaptor before attaching an electrical device to the power adaptor;
- Fig. 2: illustrates the first embodiment of Fig. 1, showing the power adaptor after attaching the electrical device to the power adaptor;
- Fig. 3: illustrates a second embodiment of the AC power adaptor, showing the power adaptor before attaching an electrical device to the power adaptor;
- Fig. 4: illustrates the second embodiment of Fig. 3, showing the power adaptor after attaching the electrical device to the power adaptor; and
- Fig. 5: illustrates a third embodiment of the AC power adaptor.

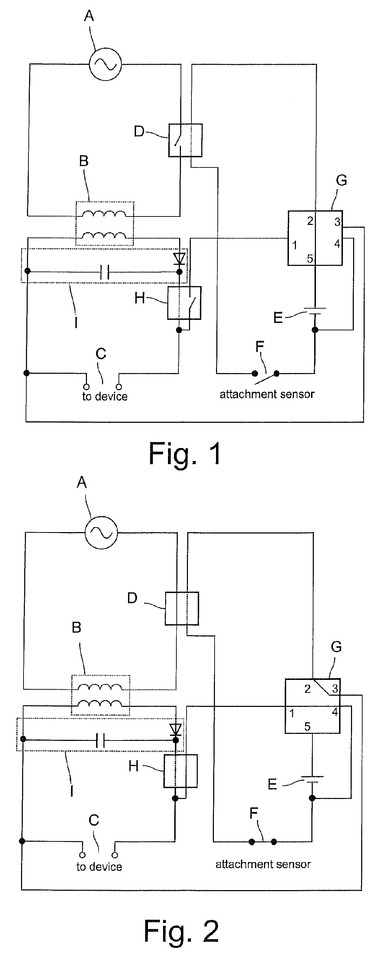

Fig. 1 illustrates a first embodiment of the AC power adaptor connected to an AC power source A, e.g., an AC power line having an AC voltage of 110 V (North America) or 220 V (Europe). Fig. 1 shows the state of the AC power adaptor when the electrical device is not attached to the AC power adaptor. The power path of the AC power adaptor comprises a transformer B having a primary coil (upper coil) and a secondary coil (lower coil) and transforming the primary AC voltage to a lower secondary AC voltage. In case of an AC to DC power adaptor the AC power adaptor also comprises a rectifier I following the secondary coil, e.g., realized by means of a diode and capacitor as illustrated in Fig. 1. At the output C of the power path, following the secondary coil and the optional rectifier, an electrical device can be electrically connected to the power adaptor. However, as mentioned before, in Fig. 1 the electrical device is not yet attached to the power adaptor.

The power adaptor further comprises a power saving mechanism to switch off the power path when the electrical device is not attached to the power adaptor. The power saving mechanism comprises a controllable switch, in particular a first relay D, the high power output contacts of which are connected to the AC power source A and the primary coil of the transformer B.

The first relay D is switched on when the current between the control input contacts (see contacts connected to dotted line in the relay) of the first relay D is higher than a specific value. Otherwise, in particular in case of no current between the control input contact, the first relay D is switched off. As shown in Fig. 1, the first relay D is currently switched off (see open switch in first relay D), i.e., the output contacts of the first relay D are not connected to each other. Thus, the AC power source A and the transformer B are decoupled and the power path of the power adaptor is switched off.

The power saving mechanism of the power adaptor further comprises a control circuit for controlling the state of the first relay D. The control circuit comprises a power source, here: a voltage source E in form of a battery. The voltage source E is provided for feeding the control circuit. The control circuit further comprises attachment sensing means (see attachment sensor F in Fig. 1) for sensing attachment of the electrical device to the power adaptor. The attachment sensor F forms a switch, connecting the voltage source E to the control circuit when the electrical device is attached to the AC power adaptor and disconnecting the voltage source E from the control circuit when the electrical device is detached from the power adaptor. The attachment sensor F may be realized as a mechanical switch, in particular a small button located near the electrical connection between the power path and the electrical device, which is automatically pressed when the electrical device is attached to the power adaptor.
Fig. 1 illustrates the state of the power adaptor when the electrical device is not attached to the AC power adaptor. In this state the attachment sensor F forms an open connection, thereby decoupling the voltage source E from the control circuit and the control input of the first relay. Thus, no current flows between the control input contacts of the first relay D and the first relay D is switched off.

The control circuit may optionally further comprise a controllable switching device G comprising five contacts 1, 2, 3, 4 und 5. The switching device G internally connects specific contacts in dependence of the voltage between contacts 1 and 3. The switching device G is used to save power of the voltage source E by disconnecting the voltage source E from the control circuit after the power path is switched on. Further, the controllable switching device G is configured to allow the power path (instead of the voltage source E) feeding the control circuit after the power path is switched on.

Alternatively, a short circuit between contacts 2 and 5 of the switching device G may be provided instead of the controllable switching device G (also the second relay H can be omitted). In this case the voltage source E is constantly discharging when the power path is switched on.

The controllable switching device G interacts with a second relay H. The second relay H is connected to be controlled by the power path, i.e., the current in the power path may flow through the input contacts of the second relay H, thereby controlling the state (on or off) of the relay. One of the two output contacts of the second relay H is electrically connected to contact 1 of the switching device G, the other is connected to the power path.

The second relay H is switched on when the current between the control input contacts of the second relay H is higher than a specific value. Otherwise, in particular in case of no current between the control input contact, the second relay H is switched off. As shown in Fig. 1, the second relay H is currently switched off (see open switch in the second relay H), i.e., the output contacts of the second relay H are not connected to each other. Thus, the power path and contact 1 of the switching device G are decoupled and contact 1 is floating.

As already mentioned above, the voltage between contacts 1 and 3 defines the switching state of the switching device G. In Fig. 1 contact 1 is currently floating and the switching device G is in a first state, where contacts 2 and 5 are internally connected and the remaining contacts 1, 3 and 4 are internally decoupled.

When the electrical device is attached to the power adaptor, the attachment sensor F forms a closed switch, connecting the voltage source E to the control circuit. This causes a current between the control contacts of the first relay D and to switch on the first relay D (the switch in relay D is now closed). By switching on the first relay D the power path switches on and current flows between the control contacts of the second relay H to the device. Consequently, the second relay H is switched on (the switch in relay H is now closed) and the connection between the power path and contact 1 of the switching device becomes low-ohmic. This results in a voltage between contacts 1 and 3.

The voltage between contacts 1 and 3 is used for switching the state of the switching device G into a second state. In this second state contacts 1 and 4 are connected to each other, contacts 2 and 3 are connected to each other and contacts 2 and 5 are disconnected from each other. Fig. 2 illustrates the first embodiment of Fig. 1, with the electrical device being now attached to the power adaptor. The switching device G already switched into the second state after switching on both relays D and H.

Due to the disconnection between contacts 2 and 5, the voltage source E is decoupled from the control circuit. Instead the power path feeds the control circuit (see loop starting from the power path, via the second relay H, via connected contacts 1 and 4, via the closed attachment sensor F, via the control contacts of the first relay D, via connected contacts 2 and 3 and back to the power path. This keeps the first relay D switched on without discharging the voltage source or battery E. For preventing decoupling of the electrical device from the power path when the power path feeds the control circuit and for limiting the current in the control circuit, a resistor (not shown) may be provided in said loop. If placed externally to the switching device G between contacts 2 and 5 such resistor would also limit the current in case the voltage source E feeds the control circuit, thereby limiting the power dissipation of the power saving mechanism.

Due to the disconnection between contacts 2 and 5 the battery E is only connected for a very short moment, thereby saving energy of the battery E. By saving energy of the battery E, the power saving mechanism can be used for a longer period without replacing or recharging the battery E. Moreover, only a small battery E is needed to keep the adaptor working for a long period. The battery E is only connected for the time it takes to switch on the power path and to switch the switching device G into the second state, with the battery E being then disconnected and the power path feeding the control circuit.

Preferably, the battery E is a rechargeable battery and the power saving mechanism is configured to charge the battery E when the power path is switched on (not shown). In this case, any power loss due to feeding the control circuit may be fully compensated.

To prevent the battery E from discharging when the AC adaptor is not connected to the AC power source A but connected to the device, the AC power adaptor may be configured to detect that the adaptor is not connected to the AC power source A and to disconnect the battery E in such case after a short period (e.g., after a few seconds). Therefore, only a small battery E is needed. Alternatively, such power loss in case the AC adaptor is not connected to the AC power source A may be compensated by recharging the battery E after the power path is switched on (see above).

After the power path has been switched on as shown in Fig. 2 and later the electrical device is detached from the power adaptor, the attachment sensor opens, thereby switching off the first relay D and the power path. In this case also the second relay H is switched off. Thus, contact 1 of the switching device is floating and the switching device G behaves as illustrated in Fig. 1.

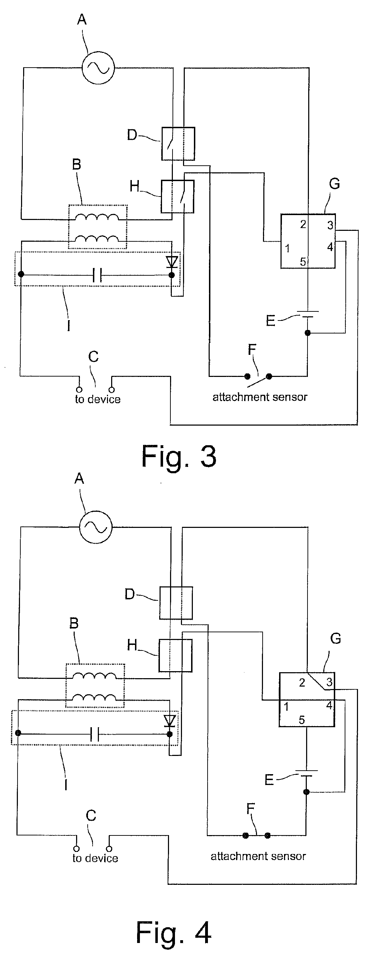

Fig. 3 illustrates a second embodiment of the AC power adaptor connected to an AC power source A. Figurative elements in Fig. 1 and Fig. 3 denoted by the same reference signs are basically the same. Fig. 3 shows the state of the AC power adaptor when the electrical device is not attached to the AC power adaptor (the attachment sensor F forms an open switch). The implementation and function of the second embodiment are very similar to the first embodiment as illustrated in Fig. 1. Therefore, the remarks to the first embodiment are basically also applicable to the second embodiment.

The second embodiment in Fig. 3 differs from the first embodiment in that the control contacts of the second relay H are connected to the power path before the primary coil of the transformer B instead of after the secondary coil as in the first embodiment. The output of the second relay is still connected to the controllable switching device G.

Similarly as in Fig. 1, when attaching the electrical device to the power adaptor, the attachment sensor F forms a closed switch, connecting the voltage source E to the control circuit and switching on the first relay D. This results in a current between the control contacts of the second relay H. Consequently, the second relay H is switched on and the connection between the power path of and contact 1 of the switching device G becomes low-ohmic. Therefore, the state of the switching device G is switched as already discussed in the detail with respect to the first embodiment.

Fig. 4 illustrates the second embodiment of Fig. 3, with the electrical device being now attached to the power adaptor and the switching device 6 already switched into the second state after switching on both relays D and H. Due to the disconnection between contacts 2 and 5, the voltage source E is decoupled from the control circuit. Instead the power path feeds the control circuit via the output of the relay and the switching device G. As already discussed with reference to Fig. 2, this keeps the first relay D switched on without further discharging the voltage source E.

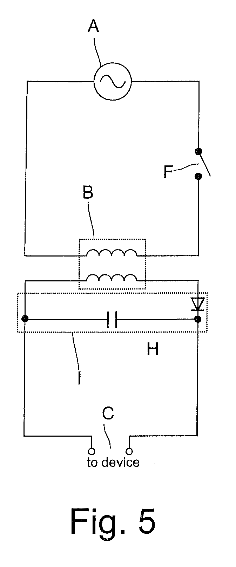

As mentioned above, the invention may be also implemented in a very simple manner with the attachment sensing means and the switching means forming a combined single element providing both functions. Accordingly, Fig. 5 illustrates a third embodiment of the invention, with the attachment sensor F acting both as attachment sensing means and as switching means for switching off the power path when the electrical device is not attached to the power adaptor. The advantage of the first and second embodiments in Figs. 1 to 4 in contrast to the third embodiment in Fig. 5 is that the attachment sensor F is not in the high voltage AC power path.

## Claims

1. An AC power adaptor for supplying power from an AC source (A) to an electrical device via a power path in the power adaptor, wherein the power adaptor comprises a power saving mechanism, the power saving mechanism comprising
- attachment sensing means (F) for sensing attachment of the electrical device to the power adaptor; and
- switching means (D) for allowing the power-path to be switched off when the electrical device is not attached to the power adaptor.

2. The AC power adaptor according to claim 1, wherein the switching means (D) are for switching on the power path when the electrical device is attached to the power adaptor and switching off the power path when the electrical device is detached from the power adaptor.

3. The AC power adaptor according to claim 2, wherein
- the switching means (D) comprise a controllable switch connected to switch on and off the power path; and
- the power saving mechanism comprises a control circuit controlling the controllable switch (D), with the control circuit comprising the attachment sensing means (F) and a power source (E) feeding the control circuit.

4. The AC power adaptor according to claim 3, wherein the sensing means (F) are configured to selectively connect the power source (E) to the control circuit.

5. The AC power adaptor according to claim 4, wherein
- the controllable switch is a relay (D);
- the power source is a voltage source (E); and
- the sensing means (F) are configured to selectively connect the power source (E) to the input of the relay (D).

6. The AC power adaptor according to claim 4, wherein the sensing means (F) are configured to connect the power source (E) to the control circuit when the sensing means (F) sense attachment of the electrical device to the power adaptor.

7. The AC power adaptor according to claim 3, wherein the power saving mechanism is configured in that the power path feeds the control circuit after the controllable switch (D) has switched on the power path.

8. The AC power adaptor according to claim 3, wherein the power saving mechanism is configured to disconnect the power source (E) from the control circuit after the controllable switch (D) has switched on the power path.

9. The AC power adaptor according to claims 3, wherein the power saving mechanism further comprises
- a relay (H) connected to be controlled by the power path and to control a controllable switching device (G) as part of the control circuit; and
- the controllable switching device (G) having a plurality of switches and being configured to
o allow the power path feeding the control circuit via the relay (H) after the controllable switch (D) has switched on the power path; and
o disconnect the power source (E) from the control circuit after the controllable switch (D) has switched on the power path.

10. The AC power adaptor according to claim 1, wherein the attachment sensing means (F) comprise a contact different from the contact for power supply or a mechanical switch.

11. The AC power adaptor according to claim 3, wherein the power source (E) is a rechargeable power source and the power saving mechanism is configured to charge the power source (E) when the power path is switched on.

12. Method for saving power in an AC power adaptor for supplying power from an AC source (A) to an electrical device via a power path in the power adaptor, comprising the steps of
- sensing detachment of the electrical device from the power adaptor; and
switching off the power-path when the electrical device is detached from the power adaptor.

## Amended claims

### Amended claims in accordance with Rule 137(2) EPC.

**1.** An AC power converter for supplying power from an AC source (A) to an electrical device via a power path in the power converter, wherein the power converter comprises a power saving mechanism, the power saving mechanism comprising
- a control circuit controlling a controllable switch, the control circuit comprising attachment sensing means (F) for sensing attachment of the electrical device to the power converter and a power source (E) feeding the control circuit, the attachment sensing means (F) forming a switch connecting the power source (E) to the control circuit when the electrical device is attached to the power converter; and
- switching means (D) for allowing the power-path to be switched off when the electrical device is not attached to the power converter, the switching means comprising the controllable switch, the controllable switch connected to switch on and off the power path and being controlled by the control circuit.

**2.** The AC power converter according to claim 1, wherein the switching means (D) are for switching on the power path when the electrical device is attached to the power converter and switching off the power path when the electrical device is detached from the power converter.

**3.** The AC power converter according to claim 2, wherein the sensing means (F) are configured to selectively connect the power source (E) to the control circuit.

**4.** The AC power converter according to claim 3, wherein
- the controllable switch is a relay (D);
- the power source is a voltage source (E); and
- the sensing means (F) are configured to selectively connect the power source (E) to the input of the relay (D).

**5.** The AC power converter according to claim 3, wherein the sensing means (F) are configured to connect the power source (E) to the control circuit when the sensing means (F) sense attachment of the electrical device to the power converter.

**6.** The AC power converter according to claim 2, wherein the power saving mechanism is configured in that the power path feeds the control circuit after the controllable switch (D) has switched on the power path.

**7.** The AC power converter according to claim 2, wherein the power saving mechanism is configured to disconnect the power source (E) from the control circuit after the controllable switch (D) has switched on the power path.

**8.** The AC power converter according to claims 2, wherein the power saving mechanism further comprises
- a relay (H) connected to be controlled by the power path and to control a controllable switching device (G) as part of the control circuit; and
- the controllable switching device (G) having a plurality of switches and being configured to
o allow the power path feeding the control circuit via the relay (H) after the controllable switch (D) has switched on the power path; and
o disconnect the power source (E) from the control circuit after the controllable switch (D) has switched on the power path.

**9.** The AC power converter according to claim 1, wherein the attachment sensing means (F) comprise a contact different from the contact for power supply or a mechanical switch.

**10.** The AC power converter according to claim 2, wherein the power source (E) is a rechargeable power source and the power saving mechanism is configured to charge the power source (E) when the power path is switched on.
